## Europäisches Patentamt

## European Patent Office

## Office européen des brevets

(19)

(11) Veröffentlichungsnummer: **0 279 872**
**B1**

(12) **EUROPÄISCHE PATENTSCHRIFT**

(45) Veröffentlichungstag der Patentschrift:
**12.12.90**

(51) Int. Cl.⁵: **F27D 5/00**, F27B 9/36

(21) Anmeldenummer: **87102468.3**

(22) Anmeldetag: **21.02.87**

(54) Kassette zum Brennen keramischer formlinge insbesondere Mauerziegel.

(43) Veröffentlichungstag der Anmeldung:
**31.08.88 Patentblatt 88/35**

(45) Bekanntmachung des Hinweises auf die Patenterteilung:
**12.12.90 Patentblatt 90/50**

(84) Benannte Vertragsstaaten:
**AT DE GB NL**

(56) Entgegenhaltungen:
**DE-A- 3 109 146**
**DE-A- 3 204 233**
**DE-A- 3 231 515**
**DE-A- 3 413 545**
**US-A- 1 906 785**
**US-A- 3 561 420**

(73) Patentinhaber: **Hässler, Andreas, Jahnstrasse 45,
D-7904 Erbach(DE)**

(72) Erfinder: **Hässler, Andreas, Jahnstrasse 45,
D-7904 Erbach(DE)**

(74) Vertreter: **Patentanwälte Dipl.-Ing. Bodo Thielking
Dipl.-Ing. Otto Elbertzhagen, Gadderbaumer Strasse 20,
D-4800 Bielefeld 1(DE)**

ACTORUM AG

**Beschreibung**

Die Erfindung betrifft eine Kassette zum Brennen keramischer Formlinge, insbesondere Mauerziegel, mit einem Kassettenboden und Seitenwänden, in der zwischen Kassettenboden und Formlingen fester Brennstoff angeordnet ist, mit Auflagebereichen an den oberen Rändern der Seitenwände für die Formlinge oberhalb des Brennstoffs.

Bei einer bekannten Vorrichtung dieser Art (EP-PS O 059 986) besitzt die Kassette eine U-förmige Grundstruktur mit zwei Seitenwänden, zwischen denen vorzugsweise plattenförmige keramische Formlinge angeordnet sind. Der Brennstoff befindet sich bei dieser bekannten Lösung in Vertiefungen, die im Kassettenboden vorgesehen sind.

Der Anwendungsbereich einer derartigen bekannten Kassette ist begrenzt, da mit dieser Kassette nur vergleichsweise geringe Brennstoffmengen benutzt werden können. Wenn aber beispielsweise nur eine Kassettenlage auf dem Brennwagendeck vorgesehen ist, auf der vergleichsweise viel Brenngut gestapelt ist, wird eine wesentlich höhere Brennstoffmenge erforderlich als sie mit den bekannten Kassetten benutzt werden kann. Es ist dabei auch nicht möglich, eine höhere Brennstoffmenge einfach dadurch vorzusehen, daß man unter Beibehaltung der Grundform der Kassette die Brennstoffmenge höher aufschichtet.

An eine erhöhte Brennstoffschicht kann keine ausreichende Verbrennungsluftmenge gelangen, mit der Folge, daß dann teilweise nur Verkokungsprozesse stattfinden, nicht aber die gewünschte Verbrennung.

Eine Kassette der im einleitenden Teil des Anspruchs 1 erwähnten Art ist im übrigen in der DE-A 3 413 545 beschreiben.

Ausgehend von diesem Stand der Technik liegt der Erfindung die Aufgabe zugrunde, eine Kassette zu schaffen, die die Aufnahme ausreichender Brennstoffmengen auch bei hohem Wärmebedarf erlaubt und gleichwohl günstige Verbrennungsbedingungen schafft, sowie vermeidet, daß die Formlinge infolge zu starker Druckbeanspruchung deformiert werden.

Die Lösung dieser Aufgabe erfolgt dadurch, daß die Seitenwände umlaufend angeordnet und in den Seitenwänden Durchgangsöffnungen für den Zutritt von Verbrennungsluft zum Brennstoff vorgesehen sind.

Eine derartige Kassette kann beliebig groß ausgebildet werden. Sie erlaubt die Aufnahme praktisch beliebig großer Brennstoffmengen und stellt dennoch eine einwandfreie Verbrennung des Festbrennstoffs sicher.

Weitere bevorzugte Ausgestaltungen der Erfindung sind in den Unteransprüchen beschrieben.

Nachstehend wird eine bevorzugte Ausführungsform der Erfindung anhand der Zeichnung im einzelnen beschrieben. Es zeigen:

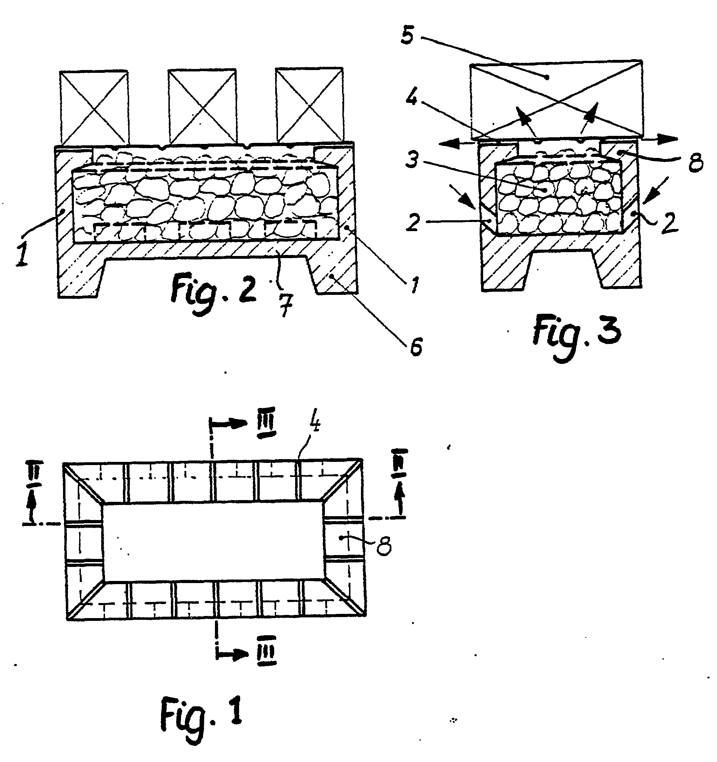

Figur 1 - eine Draufsicht auf die Kassette,
Figur 2 - einen Längsschnitt durch die Kassette entlang Ebene II-II in Figur 1,

Figur 3 - einen Querschnitt durch die Kassette gemäß Ebene III-III in Figur 1.

Die Kassette besitzt ringsumlaufende Seitenwände 1, ferner einen Kassettenboden 7 mit vier jeweils in den Ecken angeordneten Füßen 6 und einen umlaufenden, gegenüber der Breite der Seitenwände 1 verbreiterten Kassettenrand 8, der als Auflage für die keramischen Formlinge 5 oder Formlingsstapel dient.

Im Rand 8 sind radial verlaufende Kanäle 4 angeordnet, durch die das beim Verbrennen des Festbrennstoffs 3 entstehende Gas nach außen ausweichen kann.

Die Verbrennungsluft tritt durch die in den Seitenwänden angebrachten Durchgangsöffnungen 2 in das Innere der Kassette ein. Die Durchgangsöffnungen 2 sind in Richtung auf das Zentrum der Kassette abfallend geneigt. Durch die geneigte Anordnung der als Belüftungsöffnungen dienenden Durchgangsöffnungen 2 ist sichergestellt, daß weder Festbrennstoff noch Asche aus der Kassette herausfallen kann. Das in der Kassette entstehende Brenngas tritt nach oben zwischen dem gestapelten Brenngut aus der Kassette aus. Infolge der dadurch entstehenden Thermik wird von unten über die Durchgangsöffnung 2 stets frische Verbrennungsluft nachgezogen.

Der verbreiterte Rand 8 zeigt im dargestellten Ausführungsbeispiel die radial verlaufenden Kanäle, die ein Austreten der Brenngase fördern.

Diese Kanäle sind dann erforderlich, wenn das Brenngut abweichend von der Darstellung besonders dicht auf die Kassette gesetzt wird.

Statt der dargestellten Kanäle 4 sind auch andere Profilierungen des Randes 8 denkbar, welche einen Austritt des Brenngases erlauben bzw. fördern. So können beispielsweise auf den Rändern 8 Vorsprünge als Auflagen für die Formlinge vorgesehen sein.

Auf der Oberseite kann auch eine auflegbare Abdeckplatte oder ein Auflagerost vorgesehen sein.

Die Verbreiterung des Randbereichs 8 hat zur Folge, daß die Auflagefläche für das Brenngut sehr groß werden kann. Dies ist insbesondere für druckempfindliches Brenngut, wie z. B. Klinker zweckmäßig.

Im dargestellten Ausführungsbeispiel ist die Kassette einteilig ausgebildet. Statt dessen ist auch eine mehrteilige Ausbildung denkbar. Es ist auch denkbar, daß der obere, gegebenenfalls als Platte ausgebildete Randbereich abnehmbar ist, damit die Bekohlung und Entaschung leichter zu bewerkstelligen ist.

**Patentansprüche**

1. Kassette zum Brennen keramischer Formlinge, insbesondere Mauerziegel, mit einem Kassettenboden und Seitenwänden, in der zwischen Kassettenboden und Formlingen fester Brennstoff angeordnet ist, mit Auflagebereichen an den oberen Rändern der Seitenwände für die Formlinge oberhalb des Brennstoffs,
dadurch gekennzeichnet,

daß die Seitenwände (1) umlaufend angeordnet und in den Seitenwänden (1) Durchgangsöffnungen (2) für den Zutritt von Verbrennungsluft zum Brennstoff (3) vorgesehen sind.

2. Kassette nach Anspruch 1,
dadurch gekennzeichnet,
daß die Durchgangsöffnungen (2) in Richtung auf das Zentrum der Kassette abfallend geneigt angeordnet sind.

3. Kassette nach Anspruch 1 oder 2,
dadurch gekennzeichnet,
daß die Seitenwände (1) an ihren oberen Rändern (8) verbreitert sind.

4. Kassette nach einem oder mehreren der Ansprüche 1 bis 3,
dadurch gekennzeichnet,
daß die Ränder (8) der Seitenwände (1) von außen zum Zentrum verlaufende Vertiefungen oder Kanäle (4) aufweisen.

5. Kassette nach einem oder mehreren der Ansprüche 1 bis 4,
dadurch gekennzeichnet,
daß die Ränder (8) der Seitenwände (1) Vorsprünge als Auflagen für die Formlinge (5) aufweisen.

6. Kassette nach einem oder mehreren der Ansprüche 1 bis 5,
dadurch gekennzeichnet,
daß sie eine an der Oberseite auflegbare Abdeckplatte, einen Auflagerost oder dergleichen aufweist.

7. Kassette nach einem oder mehreren der Ansprüche 1 bis 6,
dadurch gekennzeichnet,
daß sie aus mehreren Einzelelementen zusammengesetzt ist.

8. Kassette nach einem oder mehreren der Ansprüche 1 bis 7,
dadurch gekennzeichnet,
daß sie an ihrer Unterseite Standfüße (6) aufweist.

**Revendications**

1. Cassette de cuisson d'objets céramiques, en particulier de briques, pourvue d'un fond de cassette et de parois latérales, ans laquelle un combustible solide est disposé entre le fond de la cassette et les objets à cuire, les bores supérieurs des parois latérales présentant des zones d'appui pour soutenir les objets à cuire au-dessus du combustible, caractéisée par le fait que les parois latérales (1) sont disposées périphériquement et que des percées (2) sont prévues dans les parois latérales (1) aux fins d'amenée d'air de combustion au combustible (3).

2. Cassette selon revendication 1, caractérisée par le fait que les percées (2) sont disposées en pente descendant vers le centre de la cassette.

3. Cassette selon revendication 1 ou 2, caractérisée par le fait que les parois latérales (1) présentent des bords supérieurs élargis (8).

4. Cassette selon une ou plusieurs revendications 1 à 3, caractérisée par le fait que les bords (8) des parois latérales (1) présentent des cavités ou des canaux (4) s'étendant de l'extérieur vers le centre.

5. Cassette selon une ou plusieurs revendications 1 à 4, caractérisée par le fait que les bords (8) des parois latérales (1) présentent des saillies servant de surfaces d'appui pour les objets à cuire (5).

6. Cassette selon une ou plusieurs revendications 1 à 5, caractérisée par le fait qu'elle est pourvue, à sa partie supérieure, d'une plaque ou d'une grille de recouvrement ou analogue amovible.

7. Cassette selon une ou plusieurs revendications 1 à 6, caractérisée par le fait qu'elle est composée de plusieurs éléments.

8. Cassette selon une ou plusieurs revendications 1 à 7, caractérisée par le fait qu'elle est pourvue, à sa partie inférieure, de pieds-supports (6).

**Claims**

1. Cassette for baking ceramic blanks, particulary building bricks, which has a cassette bottom and side walls and in which solid fuel is placed between the cassette bottom and the blanks and which features shelving areas on the top edges of the side walls for the blanks located above the fuel, characterized by the fact that the side walls (1) are built in a round set-up and they have pass-through openings (2) that allow entry of combustion air to the fuel (3).

2. Cassette based on Claim 1, characterized by the fact that the pass-through openings (2) are inclined downwards towards the centre of the cassette.

3. Cassette based on Claims 1 and 2, characterized by the fact that the side walls (1) . widening at their top edges (8).

4. Cassette based on one or several of Claims 1 to 3, characterized by the fact that the edges (8) of the side walls (1) have cavities or channels (4) running from the outside to the centre.

5. Cassette based on one or several of Claims 1 to 4, characterized by the fact that the edges (8) of the side walls (1) feature projections that serve as shelf support for the blanks (5).

6. Cassette based on one or several of Claims 1 to 5, characterized by the fact that it features a removable covering plate on the top side, a supporting grate or similar equipment.

7. Cassette based on one or several of Claims 1 to 6, characterized by the fact that it consists of several separate elements.

8. Cassette based on one or several of Claims 1 to 7, characterized by the fact that it has legs on the bottom on which it stands (6).

Fig. 2

Fig. 3

Fig. 1